Europäisches Patentamt

European Patent Office

Office européen des brevets

(11) Veröffentlichungsnummer: **0 303 963**
**A2**

(12) **EUROPÄISCHE PATENTANMELDUNG**

(21) Anmeldenummer: 88113020.7

(22) Anmeldetag: 10.08.88

(51) Int. Cl.⁴: **F27B 1/00 , C04B 2/12 ,
F27B 1/08**

(30) Priorität: **14.08.87 DE 3727218**

(43) Veröffentlichungstag der Anmeldung:
**22.02.89 Patentblatt 89/08**

(84) Benannte Vertragsstaaten:
**AT BE DE FR IT**

(71) Anmelder: **DEUTSCHE FILTERBAU GMBH
Neusser Strasse 111
D-4000 Düsseldorf 1(DE)**

(72) Erfinder: **Hartweck, Winfried, G. Dr. Dipl.-Phys.
Wittgatt 14
D-4000 Düsseldorf-Wittlaer(DE)**
Erfinder: **Hahn, Karl Ulrich. Ing.(grad.)
Am Franzosensiepen 65a
D-4600 Dortmund 50(DE)**

(74) Vertreter: **Meinig, Karl-Heinz, Dipl.-Phys. et al
PATENTANWÄLTE PFENNING MEINIG &
PARTNER ANWALTSSOZIETÄT
Mozartstrasse 17
D-8000 München 2(DE)**

(54) **Verfahren und Anlage zur Calcinierung von Kalkstein.**

(57) Gegenstand der vorliegenden Erfindung ist ein neues Verfahren, sowie eine Anlage zur Durchführung des Verfahrens zur Calcinierung von Kalkstein zur Erzeugung von Kalk unterschiedlicher Qualitäten, wobei auf konventionelle Energieträger, wie Kohle, Öl und Erdgas ganz oder zumindest weitgehend verzichtet werden kann. Statt dessen werden Abfallenergieträger unterschiedlichster Herkunft verwendet. Nach dem Verfahren werden die Abfallenergiestoffe zunächst in einem geeigneten Vergaser, die als Schachtreaktor oder auch als Wirbelschichtreaktor ausgebildet ist, bei hoher Temperatur vergast, das erzeugte Schwachgas dann zunächst entstaubt und schließlich in die Brennkammern des Vergasungsreaktors geleitet, um hier verbrannt zu werden.

Die in den Abfallenergieträgern vorhandenen Schadstoffe werden durch die hohen Temperaturen im Vergasungsreaktor mit rund 1600 °C vernichtet bzw. unschädlich gemacht. Staub und erste schädliche Bestandteile werden dann in der Koksfüllung bzw. in den Entstaubern niedergeschlagen, wobei eine weitere Reinigung bei der Verbrennung im vergasungsreaktor mit 1200 °C eintritt und schließlich beim Druchströmen des Kalksteinbettes, wo restliche Schadstoffe durch chemische Reaktion und/oder mechanische Bindung festgehalten werden.

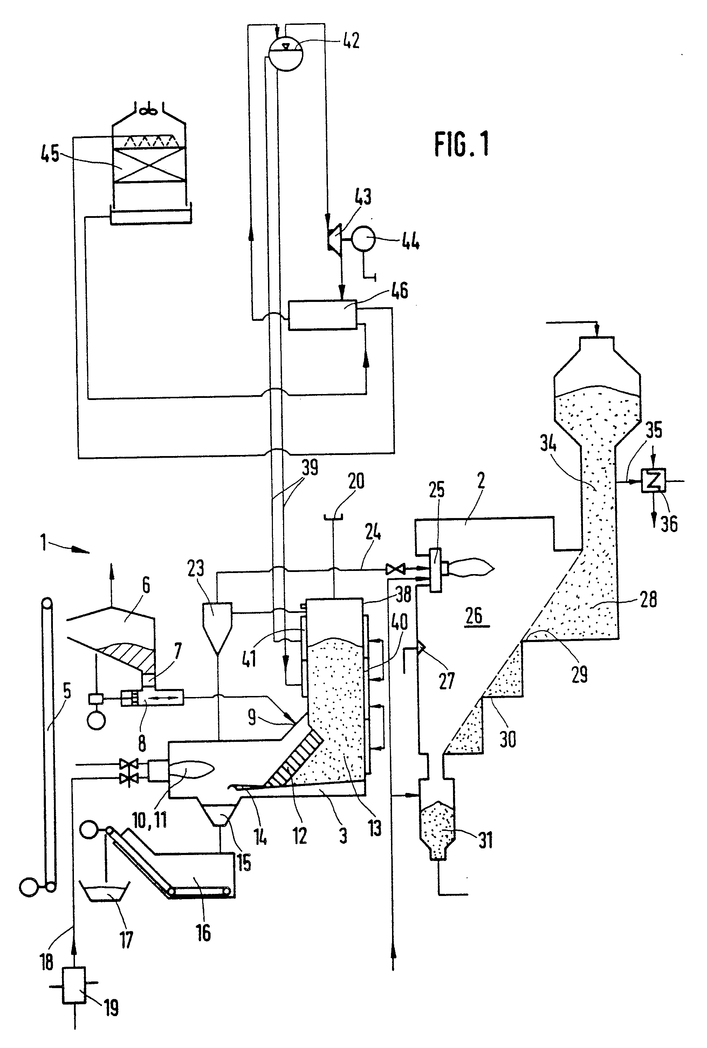

Für die Veröffentlichung ist Figur 1 vorgesehen.

FIG.1

## VERFAHREN UND ANLAGE ZUR CALCINIERUNG VON KALKSTEIN

Die Erfindung betrifft ein Verfahren zur Calcinierung von Kalkstein zur Erzeugung von Branntkalk oder branntkalkähnlichen Produkten durch Zuführung von Wärme in einen den Kalkstein führenden Ofen, bei dem Schwachgas aus Abfallenergieträgern erzeugt wird und dieses Gas nachfolgend entstaubt, unter Gewinnung der notwendigen Calcinierungswärme in den kalksteinführenden Ofen eingeleitet und hier verbrannt wird, wobei die Verbrennungs-Abgase durch das Kalksteinbett geführt werden. Die Erfindung betrifft außerdem eine Anlage zur Durchführung des Verfahrens zur Calcinierung von Kalkstein mit einem Kalkbrennofen, in dem der Kalkstein in einen Schacht geführt wird und mit in verteilt angeordneten Brennern erzeugte Calcinierungswärme in Kontakt gebracht wird und dem ein Entstauber nachgeordnet ist.

Kalkstein wird in großen Kalkbrennöfen calciniert, indem durch konventionelle Energieträger wie Kohle, Öl und Erdgas im Kalkbrennofen eine Temperatur von rund 1000 °C erzeugt wird. Je nach Qualität des zu erzeugenden Kalkes muß der Energieträger ausgesucht werden, da ansonsten der Eintrag von Staub zu einer Qualitätsminderung führt. Die allgemeinen Qualitätsanforderungen an das Produkt Branntkalk, sei es Hartbrannt oder Weichbrannt, lassen einen vermehrten Eintrag von Staub in den Calcinierungsanteil des Ofens nicht zu, da dieser die Qualität und Farbe des Produktes negativ beeinflußt. Von daher ist man trotz der relativ hohen Energiekosten für diesen Ofenprozeß bisher im wesentlichen bei Erdgas und Öl und in wenigeren Fällen auch bei Kohle geblieben. Abfallenergieträger wie Brenn stoff aus Müll, Altreifen, Autoshreddermüll, Kunststoffabfälle und auch Altöl haben im Verhältnis zu ihrem Heizwert einen relativ hohen Anteil an Asche. Diese Asche würde bei einer Verbrennung im konventionellen Kalkofen zu der erwähnten deutlichen Beeinträchtigung des Endproduktes führen. Bisher war deshalb eine Verwendung derartiger Abfallenergieträger zur Calcinierung von Kalkstein von der Fachwelt als unmöglich angesehen worden.

Aus der DE-OS 26 47 021 ist ein Verfahren zum Betreiben eines Kalkschachtofens mit einem außerhalb liegenden Feuerungsraum bekannt, in dem Altreifen unter Luftmangel thermisch versetzt werden, die Zersetzungprodukte in die Brennzone des Schachtofens eingeführt werden und im Schachtofen nachverbrannt werden. Die Zersetzungsprodukte werden aus dem Feuerungsraum dem Schachtofen über eine oder mehrere Ringleitungen in einer oder mehreren Ebenen zugeführt. Die Altreifen werden in zerkleinerter Form in den Feuerungsraum eingebracht und hier während eines relativ kurzen Zeitraumes einer Temperatur von über 1000 °C ausgesetzt. Dieses bekannte Verfahren ist jedoch nicht geeignet, Abfallstoffe zu vergasen, die einen geringeren Heizwert als Altreifen haben, oder gar aus einer heterogenen Mischung von verschiedenen Abfallsorten bestehen. Die Vergasung erfolgt hier unterhalb der Schmelztemperatur der festen Vergasungsrückstände. Etwaige bei der Vergasung auftretende, schädliche Stoffe wie Dioxin oder dergleichen enthaltende Stäube sind ungebunden und müssen in aufwendiger Weise beseitigt werden.

Der vorliegenden Erfindung liegt daher die Aufgabe zugrunde, ein Verfahren und eine Anlage der anfangs genannten Gattung zu schaffen, bei denen ein ungebundenes Auftreten von schädliche Stoffe enthaltenden Stäuben bei der Vergasung der Abfallenergieträger vermieden wird.

Diese Aufgabe wird erfindugnsgemäß dadurch gelöst, daß die festen und/oder flüssigen Abfallenergieträger bei einer Temperatur von über 1100 °C vergast werden, und daß die nicht in die Gasphase übertretenden, anfallenden Schlackebestandteile als flüssige Phase in ein Wasserbad granuliert werden. Es fallen somit jegliche Schlackerückstände in der flüssigen Phase an, was bedeutet, daß beispielsweise Dioxin und ähnliche schädliche Stoffe enthaltende, anfallende Stäube in der flüssigen Phase gebunden werden und in einem Wasserbad granuliert werden. Damit ist nicht nur eine Vereinfachung des Verfahrensganges verbunden, sondern gleichzeitig kann auch eine für das Einbinden der Schadstoffe möglichst optimale Menge an flüssiger Schlacke zur Verfügung gestellt werden, die aufgrund ihrer Zusammensetzung in vorteilhafter Weise geeignet ist, die Schadstoffe wirksam zu binden. Ein ungewolltes Auswaschen dieser Schadstoffe aus der Schlacke ist nicht mehr möglich. Damit ist das erfindungsgemäße Verfahren besonders umweltfreundlich. Das Verfahren macht es möglich, ansonsten sehr problematische Abfallstoffe in unschädliche, gebundene Formen zu überführen.

Nach einer zweckmäßigen Ausbildung des erfindungsgemäßen Verfahrens ist vorgesehen, daß die Vergasungstemperatur auf ca. 1600 °C durch Verbrennung flüssiger oder gasförmiger Brennstoffe in Form von Abfallenergieträgern gebracht und gehalten wird. Aufgrund dieser hohen Temperatur wird erreicht, daß schädliche Verbindungen wie beispielsweise Dioxine oder Furane zu einem großen Teil auch aufgespalten und dadurch unschädlich gemacht werden. Vorteilhaft dabei ist, daß diese hohe Vergasungstemperatur ebenfalls durch einen Abfallenergieträger, vorzugsweise einen flüssigen Abfallenergieträger erzeugt wird, so daß auf edle Energieträger nicht zurückge griffen werden muß oder aber eben nur zum Anfahren einer solchen Anlage. Vorteilhafterweise kann dazu Altöl beliebiger Herkunft als Abfallenergieträger verwendet werden.

Um den Calcinierungsprozeß zu begünstigen, sieht eine Weiterbildung der Erfindung vor, daß das Gas an mehreren über die Wand des Ofens verteilten Stellen gleichzeitig verbrannt wird, wodurch in der jeweiligen Brennkammer eine insgesamt gleichmäßige Calcinierung des durchgeführten Kalksteins erfolgt.

Die Abgase werden zweckmäßig durch das Kalksteinbett des Kalkbrennofens geführt, um so eine mechanische und/oder chemische Reinigung zu erzielen. Dabei geben die Abgase einen Teil ihrer Wärme an das Kalksteinbett ab, so daß dieses vorgewärmt wird. Nach dem Durchströmen des Kalksteinbettes werden die Abgase dann aus dem Kalkbrennofen herausgeführt, wobei ihnen anschließend weitere Wärme entzogen und zur Vorwärmung der Verbrennungsluft für die Vergasung eingesetzt wird. Insgesamt ergibt sich somit eine sehr günstige Wärmebilanz und eine Optimierung des Verfahrens.

Gemäß der Erfindung ist es möglich, Stäube umweltfreundlich zu verarbeiten, die aus anderen Prozessen stammen. Hierzu sieht das erfindungsgemäße Verfahren vor, daß Dioxin o.ä. schädliche Stoffe enthaltende Stäube zusammen mit dem Abfallenergieträger oder getrennt im Rahmen der Vergasung hocherhitzt und nach Erreichen der flüssigen Phasen in einem Wasserbad granuliert werden. Damit werden die schädliche Stoffe enthaltenden Stäube so umgeformt, daß sie anschließend als Schlacke weiterverwendet, ober aber zumindest sicher abgelagert werden können, da evtl. noch vorhandene Schadstoffe nicht mehr aus der glasartigen Asche herausgewaschen werden können.

Zur Aufbesserung des Schwachgases, das in der Vergasung der Abfallenergieträger erzeugt wird und gleichzeitig zur Entstaubung wird das Gas vorzugsweise vor der eigentlichen Entstaubung durch einen Koksfilter mit gleichem Schlackenaustrag geführt. Unter "gleichem Schlackenaustrag" soll hier verstanden werden, daß die bei diesem Prozeß entstehende Koksschlacke vorteilhaft mit der Schlacke der Abfallenergieträger gemischt in ein Wasserbad geführt und dann weitergefördert wird. Damit ist nicht nur eine Vereinfacherung des Verfahrensganges verbunden, sondern gleichzeitig wird auch für das Einbinden von Schadstoffen eine möglichst optimale Menge an flüssiger Schlacke zur Verfügung gestellt, die aufgrund ihrer Zusammensetzung auch wirklich geeignet ist, die Schadstoffe wirksam einzubinden.

Um den Vergasungsprozeß möglichst gezielt und umfassend durchzuführen, wird die bei der unterstöchiometrischen Verbrennung des Altöls entstehende Flamme so ausgerichtet, daß die Verbrennungswärme unmittelbar dem zu vergasenden Abfallstoff bzw. Abfallenergieträger zugeführt wird. Da es sich insbesondere bei der Verbrennung von Altöl um eine entsprechend große Flamme handelt und dafür geeignete Brenner verwendet werden können, ist es möglich, die Flamme so auszurichten, daß sie wirksam auf die eintretenden Abfallenergieträger zu richten ist.

Zur Durchführung des Verfahrens wird ein Kalkbrennofen eingesetzt, dem ein Entstauber nachgeordnet ist. Über den Entstauber wird Kalkstaub zurückgewonnen, der zusammen mit dem übrigen gebrannten Kalk oder auch getrennt davon weiterverarbeitet werden kann. Energiemäßig ist vorgesehen, daß dem Kalkbrennofen ein Vergasungsreaktor mit auf den Brennstoffeinlauf gerichteter Verbrennungsdüse, im und/oder außerhalb angeordnetem Heißgasfilter sowie einem Schlackenbad mit Schleusenaustrag zugeordnet ist, wobei die verteilt angeordneten Brenner als auf heiße Gase ausgelegte Schwachgasbrenner ausgebildet sind. Eine solche Anlage ermöglicht die Herstellung und gleichzeitige Verarbeitung eines Schwachgases zur Herstellung von Branntkalk bzw. zur Calcinierung von Kalkstein. Im Vergasungsreaktor wird dabei ein Schwachgas erzeugt, das aufgrund seiner hohen Temperatur und aufgrund der Verbrennung im Kalkbrennofen dort eine Calcinierungswärme erbringt, die bei rund 1100°C liegt. Dabei wird eine qualitätsmindernde Beeinflussung des Kalkes dadurch verhindert, daß dieses Gas vorher wirksam gereinigt und durch die im Vergasungsreaktor herrschende hohe Temperatur von Schadstoffen befreit wird.

Um die Temperatur im Kalkbrennofen regeln zu können, ist vorgesehen, daß die den Brennern vorgeordneten Sammelleitungen mit einem veränderlichen Quer schnitt ausgebildet sind. Außerdem ist ergänzend vorgeschlagen, daß zusätzliche Brenner zugeordnet werden, die als Öl- oder Normalgasbrenner ausgelegt sind, so daß bei der Einleitung des Calcinierungsprozeß aber auch bei seiner Durchführung eine kontinuierliche und optimierte Steuerung auf dem jeweils gewünschten bzw. notwendigen Niveau möglich ist.

Zweckmäßigerweise sind die zusätzlichen Brenner in den einzelnen Brennkammern verteilt und/oder im Kalkbrennofen angeordnet. Damit kann die insgesamt in den Kalkbrennofen hineingeführte Calcinierungswärme auf einem vorteilhaft gleichmäßigen Niveau gehalten werden bzw. ist es möglich, den Kalkstein bei entsprechender Führung auch von innen her zu calcinieren, indem nämlich Brenner im Kalkbrennofen vorgesehen werden.

Nach einer weiteren zweckmäßigen Ausbildung weist der Kalkbrennofen einen in die oberste Brennkammer mündenden Füllschacht auf, aus dem ein Abgasrohr herausführt, wobei diesem ein Abgaswärmetauscher zugeordnet ist. Dadurch ist es möglich, das an sich noch sehr heiße Abgas zur Vorwärmung der für den Betrieb des Vergasungsreaktors benötigten Verbrennungsluft zu benutzen.

In vorteilhafter Weise sieht die Erfindung weiter vor, daß die Außenwände des Vergasungsreaktors Rohrleitungen oder Wärmetauscher aufweisen, die in ein Dampfsystem mit Dampftrommei und Kondensationsturbine eingebunden sind. Der erzeugte Dampf wird über die Kondensationsturbine geleitet und der dadurch erzeugte Strom kann dann für die Eigenstromversorgung der gesamten Anlage eingesetzt werden, so daß der Betrieb weiter wirtschaftlich verbessert werden kann. Die einzelnen Brennkammern sind so ausgebildet, daß jeder Brennkammer ein Pilotbrenner zugeordnet ist, der mit Öl oder Gas betreibbar und vorzugsweise in einem Brenner integriert ist. Der Pilotbrenner ist so dimensionniert, daß er einmal ein sicheres Zünden des zugeführten Schwachgases gewährleistet und zum andern auch ermöglicht, eine Feinregulierung der Kalkbrenntemperatur zu gewährleisten. Die Anlage wird über die gemessene Temperatur im Brennraum gesteuert. Eine weitere Ausbildung sieht vor, daß die zusätzlichen Brenner als Pilotbrenner ausgebildet bzw. als Piotbrenner wirkend angeordnet sind.

Es werden somit ein Verfahren und eine Anlage geschaffen, mit denen bisher praktisch für wirtschaftliche Prozesse nicht verwendbare Abfallenergieträger wirksam so verarbeitet werden, daß ihre Energie anschließend in einem Calcinierungsprozeß wirksam zum Einsatz kommt. dabei wird die Umwelt nicht belastet, da es gleichzeitig möglich ist, die in den Abfallenergieträgern mitgebrachten Schadstoffe wirksam einzubinden oder zu vernichten, so daß damit gleichzeitig auch eine vorteilhafte Entsorgung für derartigen Abfall möglich ist.

Weitere Einzelheiten und Vorteile des Erfindungsgengenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

Fig. 1 eine schematische Darstellung der Calcinierungsanlage,

Fig. 2 einen Ausschnitt aus dem Kalkbrennofen,

Fig. 3 einen in einen Brenner integrierten Pilotbrenner und

Fig. 4 eine andere Ausführung des integrierten Pilotbrenners.

Die in Fig. 1 wiedergegebene Calcinieranlage 1 besteht aus einem Kalkbrennofen 2 und einem vorgeschalteten Vergasungsreaktor 3. Die für die Calcinierung im Kalkbrennofen 2 benötigte Wärme wird durch Verbrennen eines Schwachgases erzeugt, das im Vergasungsreaktor 3 aus Abfallenergieträgern unterschiedlicher Herkunft hergestellt wird. Grundlegend dabei ist, daß die Abfallenergiestoffe zunächst in dem geeigneten Vergasungsreaktor 3 bei hoher Temperatur vergast werden und daß das so erzeugte Gas anschließend entstaubt wird, bevor es in die Brennkammern des Vergasungsreaktors 3 des nachgeschalteten Kalkbrennofens 2 geführt werden. Bei den Abfallenergieträgern kann es sich um Brennstoff aus Müll sogenannten Bram, um nicht pelletierten Bram, d.h. sogenannten Fluff, um Altreifen, Autoshreddermüll oder Kunststoffabfälle sowie Altöl und dgl. mehr handeln. Die Abfallenergieträger unterschiedlichster Herkunft werden, wenn möglich vorteilhaft vorher gemischt und dann über den Brennstoffregler 5 einem Dosier bunker 6 zugeführt.

Der Dosierbunker 6 weist eine Abdeckung auf, die ein Abgasrohr hat, durch das das im Bereich der Abdeckung sich ansammelnde eventuelle Gas abgeführt werden kann. Dieses Gas wird dann zweckmäßigerweise im Kalkbrennofen 2 mitverbrannt.

Die Abfallenergieträger gelangen aus dem Dosierbunker über eine Schleuse 7 in einen Eintragsförderer 8, von wo sie über den Brennstoffeinlauf 9 in den Vergasungsreaktor 3 hineingegeben werden. Sie rutschen über einen Rost 12, wobei sie durch die Hitze, die von der Verbrennungsdüse 10 und ihrer Ölflamme 11 ausgeht, vergast werden. Die Verbrennungsdüse 10 mit der Ölflamme 11 wird vorzugsweise durch Altöl beschickt, so daß der gesamte Vergasungsprozeß ausschließlich durch Abfallenergieträger bewirkt wird.

Das beim Vergasungsprozeß auf dem Rost 12 freiwerdende Schwachgas strömt anschließend durch die Koksfüllung 13 hindurch in Richtung Gasauslaß, wobei in der Gasfüllung das Gas weiter angereichert und gleichzeitig von Staubpartikeln befreit wird. Die aus der Koksfüllung 13 stammende Schlacke sowie die vom Rost 12 herabrutschende Schlacke gelangt zunächst in eine Schlackenpfanne 14, von wo sie im flüssigen Zustand in das Schlackenbad 15 herabtropft. Aufgrund dieser Gegebenheiten granuliert die Schlakke, bindet evtl. noch vorhandene schädliche Stoffe ein und kann anschließend nach Passieren des Schleusenaustrags 16 in Containern 17 abtransportiert werden. Bedingt durch die hohen Temperaturen im Vergasungsreaktor 3 ist die Bildung von flüssiger Schlacke immer gewährleistet. Die Temperaturen liegen bei 1400 bis 1600 $^\circ$C, wobei diese hohe Temperatur insbesondere durch die Verbrennung des zusätzlichen Energieträgers, d.h. des Altöls erzielt wird. Zugeführt wird gleichzeitig über die Verbrennungsluftleitung 18 notwendige Verbrennungsluft, die vorher die Vorwärmung 19 passiert hat. Der Koks für die Koksfüllung 13 kommt über die Brennstoffschleuse 20 in den Vergasungsreaktor 3, wobei die Höhe der Koksfüllung 13 mit entscheidend für die Qualität des Gases ist.

Das entstandene Gas hat zwar einen schwachen Heizwert, aber eine Temperatur, die bei 800 bis 1300 $^\circ$C vorzugsweise 1000 $^\circ$C liegt. Dieses Schwachgas wird dann zunächst ohne Absenkung der Gastemperatur in einem Heißgasfilter 23 entstaubt und dann über die Sammelleitung 24 in die Brennkammer des Kalkofens 26 geführt. Hier wird das Schwachgas in den Brennern 25, die der Brennkammer 26 und evtl. weiteren Brennkammern zugeordnet sind, verbrannt.

Bevor das Schwachgas mit hoher Temperatur den einzelnen Ofen-Brennkammern 26 zugeführt wird, wird es zunächst in mehrere Sammelleitungen aufgeteilt. Die einzelnen Teile der Sammelleitungen sind so berechnet, daß jeder Brennstoffebene des Kalkofens die erforderliche Energiemenge zugeführt wird. Die einzelnen Brennkammern 26 sind so ausgebildet, daß mehrere zusätzliche Benner 27 vorhanden und jederzeit einschaltbar sind, um so die jeweils gewünschte Temperatur und benötigte Temperatur im Kalk brennofen 2 zu gewährleisten. Damit wird das Kalksteinbett 28, das sich über mehrere Zonen 29,30 erstreckt, einer gleichmäßigen Wärme ausgesetzt, so daß ein kontinuierlicher Calcinierprozeß abläuft. Unten an die letzte Zone 30 schließt sich dann der Kalkbunker 31 an, aus dem der fertige Branntkalk oder das andere branntkalkähnliche Produkt abgezogen werden kann.

Seitlich ist ein Abgasrohr 35 vorgesehen, in das ein Abgaswärmetauscher integriert ist. An den Abgaswärmetauscher, der die notwendige Wärme für die Vorwärmung 19 erzeugt, schließt sich ein hier nicht dargestellter Entstauber dar, in dem der Kalkstaub entweder zurückgewonnen oder aber für eine gesonderte Ablagerung abgeschieden wird.

Die Außenwand 38 des vergasungsreaktors 3 ist mit einer rundumlaufenden Rohrleitung 39 bzw. mit Wärmetauschern 40, 41 ausgerüstet, so daß eine Kühlung des Vergasungsreaktors 3 mit Wasserdampf möglich wird. Das Dampfsystem mit eingebundener Dampftrommel 42 ermöglicht die Erzeugung eines gleichmäßigen Wsserdampfes, über den in der Kondensationsturbine 43 mit dem Generator 44 der Strom erzeugt werden kann, der für die Eigenstromversorgung der gesamten Calcinieranlage 1 benötigt wird. Die gesamte Anlage ist damit vorteilhaft von Drittenergie unabhängig, wenn man die Abfallenergieträger außer acht läßt. Das benötigte Wasser bzw. der Dampf werden in einem Kühlturm 45 und einem nachgeschalteten Heißkessel 46 aufbereitet.

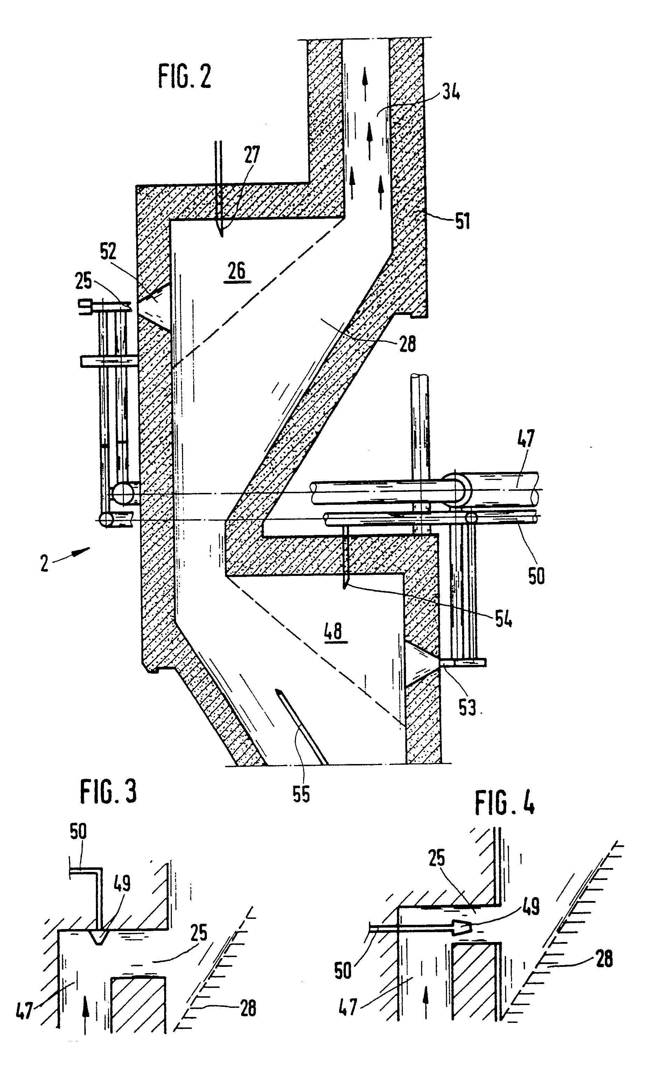

Die einzelnen Brenner 25 werden über eine Gasleitung 47, wie Fig. 2 zeigt, mit dem nötigen Schwachgas versorgt. Das für das Anfahren oder auch zur Steuerung benötigte Normalgas wird über die Gasleitung 50 zugeführt. An diese Gasleitung 50 sind beispielsweise auch die Pilotbrenner 49 angeschlossen, die zumindest einem der Brenner 25 jeder Brennkammer 26, 48 zugeordnet ist. Die spezielle Anordnung dieses Pilotbrenners 49 zeigen die Fig. 3 und 4, wobei hier nur zwei Anordnungsmöglichkeiten wiedergegeben sind. Denkbar sind auch weitere Lösungen, wobei insbesondere die Brenneröffnung 52 trichterförmig, wie in Fig. 2 gezeigt oder auch wie in Fig. 3 und 4 gezeigt, geradlinig ausgeführt sein kann. Das Ofenmauerwerk ist mit 51 bezeichnet und der der unteren Brennkammer 48 zugeordnete Brenner ist mit 53 bezeichnet. Der dieser Brennkammer 48 zugeordnete zusätzliche Brenner ist mit 54 bezeichnet, während der dem Inneren des Kalkbrennofens 2 zugeordnete zusätzliche Brenner 55 mitten im Kalkstein bett 28 verlaufend angeordnet ist.

Die nachstehende tabellarische Zusammenfassung zeigt eine beispielsweise Aufstellung möglicher Schadstoff bzw. Schwermetallanteile, nämlich: Blei,Chrom, Schwefel und Arsen in den unterschiedlichen Komponenten des Systems in mg/kg bzw. mg/m³.

| | Pb | Cr | AS | S |
|---|---|---|---|---|
| BRAM | 42 mg/kg | 17,5 | 0,5 | 508 |
| Altöl | 88 mg/kg | 0,5 | - | 176 |
| Produktgas | 104 mg/m³ | 5,4 | 0,15 | 616 |
| Abgas Filter | 2,6 mg/m³ | 0,1 | 0,008 | 30,8 |
| TA-Luft | 5 mg/m³ | 5 | 1 | 500 |
| Schlacke | 26 mg/kg | 12,6 | 0,35 | 68 |
| Kalk | 52 mg/kg | 4,4 | 0,07 | 308 |

**Ansprüche**

1. Verfahren zur Calcinierung von Kalkstein zur Erzeugung von Branntkalk durch Zuführung von Wärme in einen den Kalkstein führenden Ofen, bei dem Schwachgas aus Abfallenergieträgern erzeugt wird und dieses Gas nachfolgend entstaubt, unter Gewinnung der notwendigen Calcinierungswärme in den kalkstein führenden Ofen eingeleitet und hier verbrannt wird, wobei die Verbrennungs-Abgase durch das Kalksteinbett geführt werden,

**dadurch gekennzeichnet,**

daß die festen und/oder flüssigen Abfallenergieträger bei einer Temperatur von über 1100° C vergast werden, und daß die nicht in die Gasphase übertretenden, anfallenden Schlackebestandteile als flüssige Phase in ein Wasserbad granuliert werden.

2. Verfahren nach Anspruch 1,

**dadurch gekennzeichnet,**

daß die Vergasungstemperatur ca. 1600° C beträgt.

3. Verfahren nach Anspruch 2,

**dadurch gekennzeichnet,**

daß Altöl beliebiger Herkunft als Abfallenergieträger verwendet wird.

4. Verfahren nach Anspruch 1,

**dadurch gekennzeichnet,**

daß das Schwachgas nach Austritt aus dem Vergaser in einem Heißgaszyklon oder Multizyklon entstaubt wird.

5. Verfahren nach Anspruch 4,

**dadurch gekennzeichnet,**

daß der im Staubabscheider abgeschiedene Staub in den Vergaser zurückgeführt wird.

6. Verfahren nach Anspruch 1, dadurch gekennzeich net, daß im vergaser ein Heißgas mit einem Heizwert von mindestens 500 Kcal/Nm³ insbesondere 900 Kcal/Nm³ und eine Temperatur von mindestens 300 ° C , vorzugsweise 900 ° C erzeugt wird.

7. Verfahren nach Anspruch 6, dadurch gekennzeichnet, daß das erzeugte Heißgas dem Calcinierofen direkt zugeleitet wird.

8. Verfahren nach Anspruch 1, dadurch gekennzeichnet, daß die Abluft aus dem Calcinierofen zur Vorwärmung der Verbrennungsluft für den Vergaser eingesetzt wird.

9. Verfahren nach Anspruch 1, dadurch gekennzeichnet, daß die sich bei der Vergasung der Abfallstoffe bildenden gasförmigen Schwefel-, Chlor- und Fluorverbindungen beim Durchströmen des Heißgases durch den Calcinierungsofen aus dem Gasstrom durch chemische Reaktionen mit dem Calcium abgeschieden bzw. unschädlich gemacht werden.

10. Verfahren nach Anspruch 1, dadurch gekennzeichnet, daß zur Vermeidung der Bildung von schädlichen Stoffen, wie Dioxin u.ä.,die Gastemperatur im gesamten Verfahren über 300 ° C gehalten wird, vorzugsweise über 900 ° C.

11. Anlage zur Durchführung des Verfahrens 1 oder einem der Ansprüche 2 bis 10 und damit zur Calcinierung von Kalkstein in einem Kalkbrennofen, dadurch gekennzeichnet, daß dem Kalkbrennofen (2) ein Vergasungsreaktor (3) mit einem Festbrennstoffeintrag (9) zugeordnet ist, wobei die Verbrennungs düse (10) auf den zu vergasenden Abfall gerichtet ist und daß die verteilt angeordneten Brenner (25, 53) als auf heiße Gase ausgelegte Schwachgasbrenner ausgebildet sind.

12. Anlage nach Anspruch 11, dadurch gekennzeichnet, daß die den Brennern (25, 53) vorgeordneten Zuleitungen (24) mit einem veränderlichen Querschnitt ausgebildet sind.

13. Anlage nach Anspruch 11, dadurch gekennzeichnet, daß zusätzliche Brenner (27, 54) vorgesehen sind, die als Öl oder Normalgasbrenner ausgelegt sind.

14. Anlage nach Anspruch 11 und 13, dadurch gekennzeichnet, daß die Brenner (27, 54, 55) in den einzelnen Brennkammern (26, 48) verteilt und/oder im Kalkbrennofen (2) angeordnet sind.

15. Anlage nach Anspruch 11, dadurch gekennzeichnet, daß dem Kalkbrennofen (2) ein im Abgasstrom installierter Wärmetauscher (36) zugeordnet ist.

16. Anlage nach Anspruch 11, dadurch gekennzeichnet, daß die Außenwände (38) des Vergasungsreaktors (3) Rohrleitungen (39) oder Wärmetauscher (40, 41) aufweisen, die in ein Dampfsystem mit Damptrommel (42) und Kondensationsturbine (43) eingebunden sind.

17. Anlage nach Anspruch 11, dadurch gekennzeichnet, daß jeder Brennkammer (26, 48) ein Pilotbrenner (49) zugeordnet ist, der mit Öl oder Gas betreibbar und vorzugsweise in einem Brenner (25, 43) integriert ist.

18. Anlage nach Anspruch 13 und 17, dadurch gekennzeichnet, daß die zusätzlichen Brenner (27, 54) als Pilotbrenner ausgebildet bzw. als Pilotbrenner wirkend angeordnet sind.

FIG.1

FIG. 2

FIG. 3

FIG. 4